# EUROPÄISCHE PATENTSCHRIFT

(11) **EP 2 813 164 B1**
(45) Veröffentlichungstag und Bekanntmachung des Hinweises auf die Patenterteilung: **23.09.2015**
(21) Anmeldenummer: 14177631.0
(22) Anmeldetag: 16.08.2012
(51) Int. Cl.: A47J 36/10, A47J 43/046, A47J 43/07

(54) **Elektrisch betriebene Küchenmaschine**
Electrically operated kitchen appliance
Robot ménager électrique

(43) Veröffentlichungstag der Anmeldung: 17.12.2014
(62) Teilanmeldung aus: 12180590.7
(73) Patentinhaber: Vorwerk & Co. Interholding GmbH, 42275 Wuppertal (DE)
(72) Erfinder: Brech, Oliver, 59379 Selm (DE); Starflinger, Frank, 44793 Bochum (DE)
(74) Vertreter: Müller, Enno

(56) Entgegenhaltungen:
- EP-A1- 1 153 563
- WO-A1-2012/041660

## Beschreibung

Die Erfindung betrifft eine elektrisch betriebene Küchenmaschine nach den Merkmalen des Oberbegriffes des Anspruches 1.

Küchenmaschinen der in Rede stehenden Art sind bekannt. Diese dienen insbesondere im Haushaltsbereich zur Bearbeitung von Nahrungsmitteln, weiter bevorzugt zur Zubereitung von Speisen. Diesbezüglich wird beispielsweise auf die DE 10 2010 037892 A1 verwiesen. Die dort beschriebene Küchenmaschine weist ein aus einem Maschinengehäuse herausnehmbares Gargefäß auf. Dieses trägt im Bodenbereich ein Rührwerk, welches in Zuordnungsstellung des Gargefäßes in der Küchenmaschine über einen küchenmaschinenseitigen Elektromotor antreibbar ist. Bei Betrieb der Küchenmaschine ist das Gargefäß von einem zuordbaren Deckel übergriffen. Dieser Deckel ist elektromotorisch an dem Gargefäß verriegelbar, um so ein Abheben oder Abnehmen des Deckels insbesondere im Rührwerkbetrieb zu verhindern. Zur Deckelverriegelung sind elektromotorisch antreibbare Verriegelungsteile vorgesehen, welche in der Verriegelungsstellung den Deckel in der auf dem Gargefäß aufgesetzten Stellung übergreifen und einen Gefäßrand untergreifen. Bekannt ist diesbezüglich weiter, sowohl den mit dem Deckel zusammenwirkenden Gefäßrand als auch den mit dem Gefäßrand zusammenwirkenden Bereich des Deckels im Grundriss kreisrund auszugestalten, womit ein in Umfangsrichtung bevorzugt ungerichtetes Auflegen des Deckels auf das Gargefäß ermöglicht ist.

Zum Stand der Technik ist des Weiteren auf die WO-A-2012/041660 und die EP-A-1153563 zu verweisen.

Ausgehend von dem genannten Stand der Technik beschäftigt sich die Erfindung mit der Aufgabe, eine vorteilhafte Verriegelung des Deckels an dem Gefäß anzugeben.

Diese Aufgabe ist beim Gegenstand des Anspruches 1 gelöst, wobei darauf abgestellt ist, dass der Deckel eine im Querschnitt nach unten überstehende Randkante aufweist, die im Verriegelungszustand den auskragenden Gefäßrand radial außen übergreift, dass die Achse radial innen zu einer äußersten Randkante des Gefäßrandes liegt und dass bei aufliegendem, aber noch nicht in der Verschlussstellung befindlichem Deckel eine konvexe Krümmung des Deckelrandes auf eine im Querschnitt abweichend von einer Kreisform gebildete innere Randkante des Verriegelungsteils trifft und der Deckel mittels elastisch nachgiebiger Wandungs- und/oder Dichtungsbereiche aus der noch nicht erreichten Verschlussstellung in die Verschlussstellung durch das Verriegelungsteil ziehbar ist.

Zufolge dieser Ausgestaltung wird im Zuge des Verriegelungsvorganges, d.h. weiter bevorzugt im Zuge der Drehung des oder der Verriegelungsteile aus der Deckelfreigabestellung in die Deckelverriegelungsstellung auch ein schief zum Gefäßboden beziehungsweise zu der von dem Deckel zu verschließenden Gefäßöffnung aufgesetzter Deckel in die ordnungsgemäße Gefäßverschlussstellung gedrängt. Insbesondere durch eine bevorzugte Anordnung einer weiter bevorzugt mit der Gargefäßwandung im Bereich der Gefäßöffnung zusammenwirkenden und an dem Deckel angeordneten Dichtung kann es mit Aufsetzen des Deckels auf den Gefäßrand zu einer Ausrichtung des Deckels kommen, bei welcher die mit dem Gefäßrand zusammenwirkende Deckelebene in einem Vertikalschnitt einen spitzen Winkel von beispielsweise 1 bis 10 Grad zu der Öffnungsebene des Gargefäßes einnimmt. Der insbesondere nach radial außen und weiter bevorzugt zugleich auch nach axial oben weisende Bereich des Deckelrandes weist hierzu eine in einem Vertikalschnitt durch den Deckelrand betrachtete, nach außen weisende Krümmung auf, welcher gekrümmte Deckelrandbereich im Zuge der Drehverlagerung zumindest des zugewandten Verriegelungsteiles mit einer radial inneren Randkante desselben zusammenwirkt. Die Drehverlagerung des Verriegelungsteiles bewirkt unter bevorzugtem Abgleiten der von einer Kreisform abweichenden inneren Randkante des Verriegelungsteiles über die konvexe Krümmung des Deckelrandes eine Zwangsverlagerung des Deckelbereiches im Wesentlichen nach vertikal unten, bevorzugt bis in eine Anlagestellung des Deckels auf dem umlaufenden Gefäßrand. Die hierzu benötigte Kraft in dem Verriegelungsteil wird in bevorzugter Ausgestaltung über eine mit dem Gefäßrand zusammenwirkende Lagerstelle des Verriegelungsteiles, weiter bevorzugt über einen an dem Verriegelungsteil ausgebildeten Auflagebereich als Reaktionskraft aufgenommen.

Es ist bevorzugt vorgesehen, dass die in der Verschlussstellung, bezogen auf einen Querschnitt, insbesondere auf einen Vertikalschnitt, nach radial Innen weisende Kontur des Verriegelungsteiles im Überdeckungsbereich zu dem Deckelrand ungleichmäßig verläuft, so weiter insbesondere mit Bezug auf den Drehverlagerungsweg des Verriegelungsteiles. So ist weiter bevorzugt die nach Innen weisende Kontur so ausgebildet, dass allein ein in Verriegelungs-Drehrichtung des Verriegelungsteiles betrachteter erster Abschnitt der Kontur zur Zusammenwirkung mit dem Deckelrand, weiter insbesondere mit dem konvex ausgeformten Bereich des Deckelrandes ausgebildet ist, während ein in Verriegelungs-Drehrichtung nachfolgender Abschnitt der nach Innen weisenden Kontur des Verriegelungsteiles ausgebildet ist zum freien, bevorzugt beabstandeten Übergriff des Deckelrandes.

So ist in diesem Zusammenhang weiter bevorzugt, dass die nach radial Innen weisende Kontur des Verriegelungsteiles teilweise gekrümmt und teilweise geradlinig verläuft. Hierbei ist weiter bevorzugt der gekrümmte Abschnitt der nach innen weisenden Kontur zumindest annähernd konzentrisch zur Drehachse des Verriegelungsteiles ausgebildet, während weiter bevorzugt der geradlinig verlaufende Abschnitt von dem gekrümmten Abschnitt ausgehend im Wesentlichen mit Bezug zu der Drehachse nach radial Innen gerichtet ist. Der geradlinig verlaufende Abschnitt wirkt entsprechend im Zuge des Verriegelungsvorganges in Zusammenwirkung mit dem Deckelrand in Art einer Ablaufschräge.

In weiter bevorzugter Ausgestaltung ist vorgesehen, dass der geradlinig verlaufende Abschnitt der nach radial Innen weisenden Kontur im Verriegelungszustand nahezu horizontal verläuft. Hierbei überfängt insbesondere der geradlinig verlaufende Abcschnitt einen zumindest annähernd parallel hierzu verlaufenden Abschnitt des Deckelrandes. Unter nahezu horizontalem Verlauf ist hierbei auch eine Ausrichtung des geradlinig verlaufenden Abschnitts zu verstehen, der einen spitzen Winkel von bis zu 5 Grad, weiter bevorzugt von bis zu 3 Grad zu einer Horizontalebene beziehungsweise zu der Öffnungsebene des Gefäßes einschließt.

Bevorzugt ist weiter vorgesehen, dass eine bestimmte Drehwinkelausrichtung des Gargefäßes relativ zu dem Verriegelungsteil durch an dem Gargefäß und dem Verriegelungsteil ausgebildete Formschlussmittel vorgegeben ist.

Die relative Drehwinkelausrichtung des Gargefäßes insbesondere zu der Gargefäßaufnahme der Küchenmaschine ist durch die Formschlusszusammenwirkung von Gargefäß und Verriegelungsteil gegeben, welches Verriegelungsteil positionsfest, wenngleich um eine Drehachse drehbar, an der Küchenmaschine angeordnet ist. Das oder die an dem oder den Verriegelungsteilen vorgesehenen Formschlussmittel werden entsprechend bei einem Einsetzen des Gargefäßes in die entsprechende Aufnahme der Küchenmaschine stets in derselben Position angeboten, so dass unter Zusammenwirkung mit den gargefäßseitigen Formschlussmitteln eine exakte oder zumindest annähernd exakte Drehwinkelausrichtung des Gargefäßes relativ zur Küchenmaschine beziehungsweise relativ zur Aufnahme erreicht wird. In bevorzugter Ausgestaltung erlauben die miteinander wirkenden Formschlussmittel noch eine relative Beweglichkeit des Gargefäßes in der Formschlussstellung um einen Drehwinkel von 0,5 bis 5 Grad, weiter bevorzugt 1 bis 3 Grad, wobei weiter bevorzugt der vorgenannte Drehwinkelbereich den gesamten Bereich beidseitig einer 0 Grad-Idealstellung umfasst. Die Formschlussmittel entweder an dem oder den Verriegelungsteilen oder an dem Gargefäß, darüber hinaus die Formschlussmittel sowohl des oder der Verriegelungsteile und des Gargefäßes lassen in einer bevorzugten Ausgestaltung lediglich eine bestimmte Drehwinkelausrichtung des Gargefäßes relativ zu dem Verriegelungsteil beziehungsweise zu der Aufnahme der Küchenmaschine zu. In alternativer Ausgestaltung bietet die Anordnung der Formschlussmittel zwei oder mehr bis hin zu fünf Drehwinkelausrichtungen des Gargefäßes relativ zu dem Verriegelungsteil.

In einer bevorzugten Ausgestaltung ist vorgesehen, dass die Formschlussmittel des Gargefäßes an dem Gefäßrand ausgebildet sind. Diesbezüglich sind bevorzugt im Bereich des Gefäßrandes sich im Wesentlichen radial erstreckende Stege oder Vorsprünge vorgesehen, die entsprechend mit den Formschlussmitteln zumindest eines Verriegelungsteiles in Umfangsrichtung des Gargefäßrandes zusammenwirken. Die gargefäßrandseitig vorgesehen Formschlussmittel sind bevorzugt unmittelbar aus dem Gefäßrand heraus geformt, so weiter bevorzugt materialeinheitlich und einstückig mit diesem ausgebildet. Alternativ sind diesbezüglich auch gesonderte, im Bereich des Gefäßrandes angeordnete Mittel vorsehbar, so beispielsweise Vorsprünge oder Stege bildende, an dem Gefäßrand angesetzte Mittel. Die Formschlussmittel zumindest zur Zusammenwirkung mit den Formschlussmitteln eines Verriegelungsteiles sind in Umfangsrichtung des Gefäßrandes zueinander beabstandet.

Auch ist bevorzugt, dass das Verriegelungsteil einen Auflagebereich und das Gargefäß ein zu dem Auflagebereich benachbartes Formschlussmittel aufweist. Der Auflagebereich des Verriegelungsteiles dient in bevorzugter Ausgestaltung zur Zusammenwirkung mit dem Gefäßrand, weiter bevorzugt bei im Wesentlichen nach vertikal unten geöffneter U-Querschnittsausgestaltung des Gefäßrandes zur Zusammenwirkung mit dem sich ergebenden U-Raum des Gefäßrandes. Hierbei stützt sich das Gargefäß weiter bevorzugt über den im Wesentlichen den Gefäßrand mit der Gargefäßwandung verbindenden U-Steg auf dem Auflagebereich ab, wobei in weiter bevorzugter Ausgestaltung der Auflagebereich so ausgebildet ist, dass hierbei auch im Wesentlichen eine Ausrichtung des Gargefäßes in einer Ebene quer zu einer Gefäßvertikalachse erreicht ist. Aus der vorerwähnten Literatur ist die Ausbildung eines solchen Auflagebereiches an dem Verriegelungsteil bekannt. Bevorzugt wird diesbezüglich eine linienoder punktförmige Anlage. Das oder die Formschlussmittel des Gargefäßes, weiter insbesondere das oder die im Bereich des Gefäßrandes ausgebildeten Formschlussmittel sind in Zuordnungsstellung des Gargefäßes zu dem Verriegelungsteil in Umfangsrichtung benachbart zu dem Auflagebereich des Verriegelungsteiles vorgesehen, so dass entsprechend zumindest der eine Auflagebereich des Verriegelungsteiles das diesbezügliche Formschlussmittel bildet.

Bevorzugt weist das Verriegelungsteil - bezogen auf einen Umfang des Gargefäßes - zwei beabstandete Auflagebereiche auf, zur entsprechenden Zusammenwirkung mit dem Gargefäß, weiter insbesondere mit dem Gefäßrand. In diesem Zusammenhang sind weiter bevorzugt die Formschlussmittel des Gargefäßes in Umfangsrichtung zwischen den Auflagebereichen ausgebildet, weiter bevorzugt in Umfangsrichtung betrachtet in unmittelbarer Nachbarschaft zu den Auflagebereichen. Alternativ sind die gargefäßseitigen Formschlussmittel in Umfangsrichtung betrachtet beidseitig außerhalb der Auflagebereiche vorgesehen, auch hier weiter bevorzugt unmittelbar zu diesen benachbart. So sind bevorzugt entweder die Formschlussmittel des Gargefäßes zwischen den Auflagebereichen des Verriegelungsteiles oder die Auflagebereiche des Verriegelungsteiles zwischen den Formschlussmitteln des Gargefäßes in der Zuordnungsstellung des Gargefäßes vorgesehen.

Auch ist bevorzugt vorgesehen, dass die äußerste Randkante des Gargefäßes, die den Auflagebereich in Vertikalrichtung von oben nach unten umgreift, zur Ausbildung der Formschlussmittel des Gargefäßes, in Umfangsprojektion auf den Auflagebereich des Verriegelungsteils durch eine Versetzung nach radial Innen in Überdeckung zu oder radial Innen zu dem Auflagebereich verläuft. Entsprechend ist bevorzugt zufolge eines radial versetzten Verlaufs der äußersten Gefäßrandkante in einem umfangsmäßig begrenzten Bereich nach radial innen zumindest ein Formschlussmittel des Gargefäßes ausgeprägt, weiter bevorzugt beide mit einem Verriegelungsteil zusammenwirkende Formschlussmittel.

Zufolge der vorbeschriebenen Ausgestaltung wird mit Einsetzen des Gargefäßes eine Positionierung über den Gefäßrand relativ zu den Verriegelungsteilen erreicht. Sind, wie weiter bevorzugt, zwei parallel zueinander verlaufende, zwischen sich den Gefäßrand aufnehmende Verriegelungsteile vorgesehen, so wird entsprechend eine symmetrische Positionierung des Gargefäßes zwischen den Verriegelungsteilen und den hieran ausgebildeten, bevorzugt segmentartig ausgeformten Auflagebereichen erreicht. Die Zentrierung wird hierbei weiter bevorzugt durch eine geometrische Prägung beispielsweise in Form einer Einbuchtung im Bereich des Gefäßrandes erzielt.

Bevorzugt ist auch vorgesehen, dass im Verriegelungszustand der den Gefäßrand untergreifende Auflagebereich des Verriegelungsteils jedenfalls hinsichtlich seiner tatsächlichen Zusammenwirkung mit dem Gefäßrand, bezogen auf einen Querschnitt, seitlich versetzt zu einem Berührungsbereich des Verriegelungsteils mit der Deckelaußenfläche verläuft, wobei die Berührung mit der Deckelaußenfläche ein größeres Radialmaß aufweist als die Berührung des Auflagebereiches mit dem Gefäßrand. Hierdurch ist in vorteilhafter Weise eine Selbsthemmung des Verriegelungsteiles in der Verriegelungsstellung gegeben. Zufolge der seitlich versetzten Berührungsbereiche des Verriegelungsteiles mit der Deckelaußenfläche zu dem insbesondere mit dem Gefäßrand zusammenwirkenden Auflagebereich ist sichergestellt, dass ein Drehmoment in das Verriegelungsteil eingeleitet wird, welches stets in Schließrichtung, d.h. in Deckelverriegelungsrichtung wirkt. Ein solches Drehmoment wird insbesondere bei einer Belastung von vertikal unten über den Deckelrand in das Verriegelungsteil eingeleitet, wozu in bevorzugter Ausgestaltung über die Elastizität des Deckels, darüber hinaus gegebenenfalls über eine vorgesehene elastische Dichtung eine Vorspannung auf den Anlagebereich beziehungsweise Anlagepunkt zwischen Verriegelungsteil und Deckelaußenfläche ausgeübt wird. Durch die seitlich versetzten Berührungsbereiche entsteht eine Selbstverstärkung der Kräfte in Richtung auf die Verriegelungsstellung.

Nachstehend ist die Erfindung anhand der beigefügten Zeichnung erläutert, die aber lediglich ein Ausführungsbeispiel darstellt. Auf der Zeichnung zeigt:
- Fig. 1: in schematischer Seitenansicht eine Küchenmaschine der in Rede stehenden Art;
- Fig. 2: die Draufsicht hierzu, eine Deckelverriegelungsstellung betreffend;

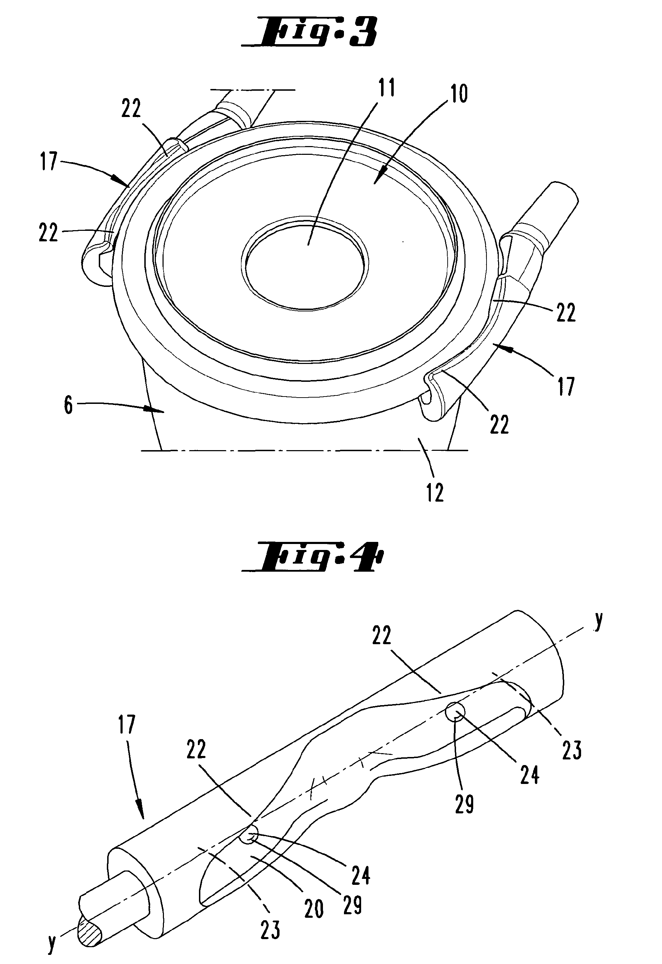

- Fig. 3: eine perspektivische Darstellung des deckelverschlossenen Gargefäßes mit Verriegelungsteilen in der Deckelverriegelungsstellung;
- Fig. 4: ein Verriegelungsteil in perspektivischer Darstellung;
- Fig. 5: den Schnitt gemäß der Linie V-V in Fig. 1 durch das Verriegelungsteil sowie einen Deckelrand und einen Gefäßrand, die Deckelfreigabestellung betreffend;
- Fig. 6: den Schnitt gemäß der Linie VI-VI in Fig. 5;
- Fig. 7: eine der Fig. 5 entsprechende Darstellung, eine Zwischenstellung im Zuge des Deckelverriegelungsvorganges betreffend;
- Fig. 8: eine weitere Folgedarstellung zu Fig. 7, die Deckelverriegelungsstellung betreffend.

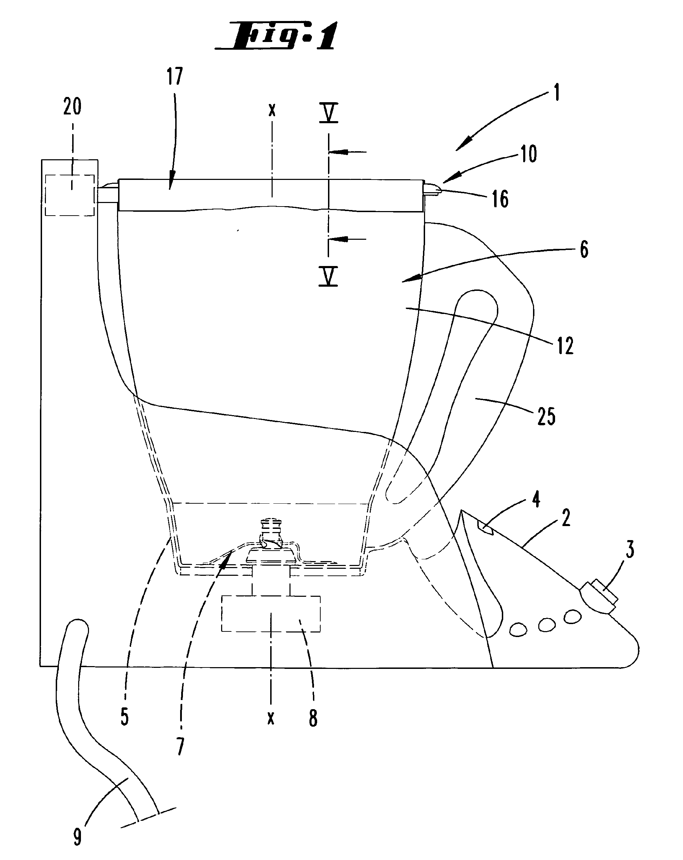

Dargestellt und beschrieben ist zunächst mit Bezug zur Figur 1 eine elektrisch betriebene Küchenmaschine 1.

Diese weist zunächst ein Bedienfeld 2 auf mit bevorzugt einer Mehrzahl von Reglern 3 und/oder Tastern sowie bevorzugt ein Display 4 zum Anzeigen der insbesondere über die Regler 3 und/oder Taster einzustellenden Parametern.

Des Weiteren verfügt die Küchenmaschine 1 über eine Gefäßaufnahme 5.

In diese ist ein Gargefäß 6 in Form eines Rührgefäßes insbesondere im Fußbereich desselben bevorzugt formschlüssig aufnehmbar und halterbar.

Das Gefäß 6 ist bevorzugt im Wesentlichen rotationssymmetrisch ausgebildet, mit einer zentralen Vertikalachse x.

Im Bodenbereich weist das Gefäß 6 bevorzugt ein Rührwerk 7 auf. Dieses ist in der Zuordnungsstellung des Gefäßes 6 in der Gefäßaufnahme 5 formschlüssig gekoppelt mit einem in der Küchenmaschine 1 vorgesehenen Rührwerkantrieb.

Die Elektroversorgung des, den Rührwerkantrieb bildenden Elektromotors 8 sowie einer weiter bevorzugt behälterbodenseitig vorgesehenen Heizung und darüber hinaus auch der elektrischen Steuerung der gesamten Küchenmaschine 1 ist über ein Netzanschlusskabel 9 erreicht.

Das Gefäß 6 ist weiter insbesondere im Betrieb des Rührwerks 7 und/oder der Heizung 8 durch einen Deckel 10 verschlossen. Dieser weist bevorzugt zentral, die Vertikalachse x des Gefäßes 6 aufnehmend, eine Einfüllöffnung 11 auf, dies weiter bevorzugt bei insgesamt im Wesentlichen kreisscheibenförmigem Grundriss des Deckels 10.

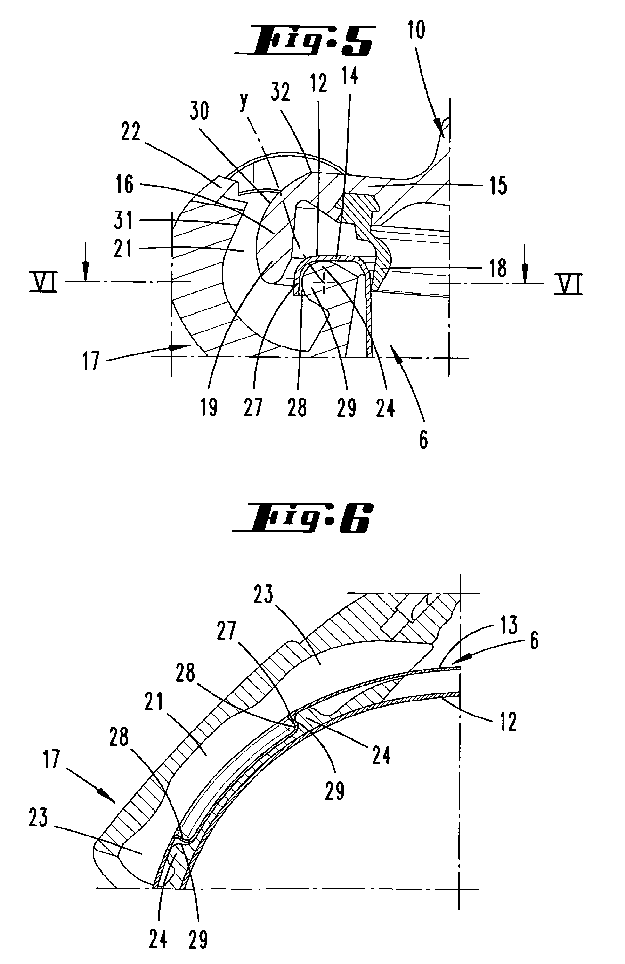

Das Gefäß 6 weist eine vom Bodenbereich sich in Vertikalrichtung nach oben erstreckende Gefäßwandung 12 auf, die gefäßöffnungsseitig in einen nach radial außen abragenden Gefäßrand 13 übergeht. Letzterer ist mit Bezug auf einen Vertikalschnitt gemäß Fig. 5 nach vertikal unten gerichtet U-förmig gebildet, mit einer nach vertikal oben gerichteten, bevorzugt parallel zum Gefäßboden und somit bevorzugt horizontal verlaufender Anlagefläche 14.

Der Deckel 10 ist unterseitig, d.h. in Zuordnungsstellung im Wesentlichen der Anlagefläche 14 sowie dem Gefäßinneren zugewandt, mit einem sich vorrangig koaxial zur Vertikalachse x erstreckenden, umlaufenden Kragen 15 versehen. Dieser trägt eine umlaufende, zur Zusammenwirkung mit der Innenfläche der Gefäßwandung 12 ausgelegte Dichtung 18. Die Dichtung 18 dient insbesondere zur fluiddichten Anordnung des Deckels 10 auf dem Gefäß 6 und besteht in üblicher Weise aus einem Weichkunststoffmaterial, beispielsweise aus einem thermoplastischen Elastomer.

Umlaufend zu dem Kragen 15 ist ein nach radial außen sich erstreckender Deckelrand 16 angeformt. Dieser überfängt in Zuordnungsstellung die Auflagefläche 14 des Gefäßrandes 13 und geht im radial äußeren Bereich über in einen sich im Wesentlichen nach vertikal unten erstreckenden Randkragen 19, zur Umfassung des radial äußeren U-Schenkels des Gefäßrandes 13.

In der ordnungsgemäßen Zuordnungsstellung stützt sich der Deckel 10 bevorzugt über dessen Deckelrand 16, weiter bevorzugt über den Kragen 15 auf der Auflagefläche 14 des Gefäßes 6 ab.

Insbesondere im Betrieb der Küchenmaschine, weiter insbesondere im Rührwerk- und/oder Heizbetrieb ist der auf das Gefäß 6 aufgesetzte Deckel 10 zu verriegeln, da im Betrieb der Küchenmaschine 1 gegebenenfalls hohe Kräfte beispielsweise durch einen Zerkleinerungsprozess mittels des Rührwerks 7 und/oder durch eine Fluiddynamik im Gefäß 6 entstehen können. Hierzu weist die Küchenmaschine 1 mindestens ein Verriegelungsteil 17 auf, welches den Deckel 10 gegen das Gefäß 6 verriegelt. Dieses Verriegelungsteil 17 ist bevorzugt langgestreckt, wellenartig ausgebildet, mit einer zentralen, in Längserstreckung ausgerichteten Achse, welche zugleich eine Drehachse y des Verriegelungsteiles 17 darstellt.

Weiter ist die Anordnung der Drehachse y in der dargestellten Ausführungsform so gewählt, dass diese sich in Zuordnungsstellung des Gargefäßes 6 in der Gefäßaufnahme 5 innerhalb des U-Raumes des Gefäßrandes 13, weiter in vertikaler Überdeckung durch die Auflagefläche 14 erstreckt.

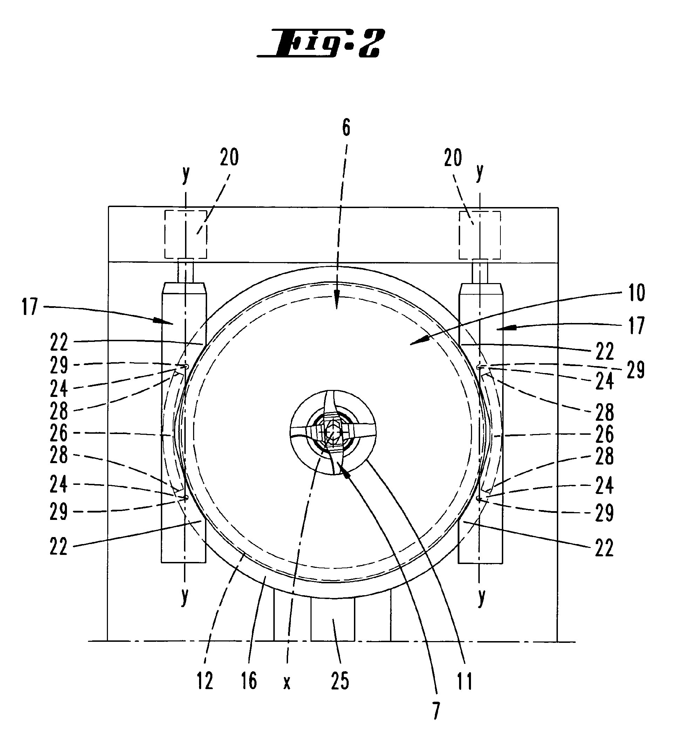

Das insgesamt langgestreckt zylinderförmige Verriegelungsteil 17 ist zufolge der vorbeschriebenen Anordnung und Ausrichtung der Drehachse y derart angeordnet, dass dieses mit Bezug auf eine Draufsicht (vgl. Fig. 2) den Gefäßrand 13 sowie in Zuordnungsstellung den Deckelrand 16 sekantenartig schneidet, wobei in dem dargestellten Ausführungsbeispiel die axiale Länge des Verriegelungsteiles 17 so gewählt ist, dass beide Endbereiche desselben mit Bezug auf eine Draufsicht frei über den sekantenartig, partiell umfassten Randbereich hinausragen.

Ein Ende des Verriegelungsteiles 17 ist mit einem in der Küchenmaschine 1 angeordneten Elektromotor 20 verbunden. Wie dargestellt, kann die Anordnung des Elektromotors 20 so gewählt sein, dass dessen Drehachse zumindest in einer Vertikalprojektion mit der Drehachse y des Verriegelungsteiles 17 zusammenfällt.

Wie dargestellt, sind bevorzugt zwei parallel zueinander ausgerichtete Verriegelungsteile 17 vorgesehen, die bevorzugt über jeweils einen Elektromotor 20 gegensinnig drehantreibbar sind.

Über den Elektromotor 20 ist das Verriegelungsteil 17 an der Küchenmaschine 1 um die Achse y drehbar festgelegt, dies weiter bei insgesamt frei auskragender Anordnung desselben.

Das insgesamt wellenartige Verriegelungsteil 17 ist weiter mit einer sich in dem dargestellten Ausführungsbeispiel etwa über bevorzugt 60 bis 70 % der axialen Länge des Verriegelungsteiles 17 erstreckenden Höhlung 21 versehen. Dies ist so gestaltet, dass sich jeweils zugeordnet den in axialer Richtung betrachteten Endbereich der Höhlung 21 mit Bezug auf einen Vertikalschnitt, d. h. mit Bezug auf einen senkrecht zur Drehachse y betrachteten Schnitt, ein im Wesentlichen kreisbogenartiger Übergreifabschnitt 22 einstellt. Dieser erstreckt sich bevorzugt konzentrisch zur Drehachse y, wobei der von dem Übergreifabschnitt 22 überdeckte Höhlungsabschnitt 23 hinsichtlich seiner Radialerstreckung als auch hinsichtlich seiner Erstreckung in Umfangsrichtung ausgelegt ist, zur im Wesentlichen formschlüssigen Aufnahme des Gefäßrandes 13 sowie des Deckelrandes 16 des auf dem Gefäß 6 aufgesetzten Deckels 10. Der hierbei mit Bezug auf einen Vertikalschnitt sich freikragend erstreckende Übergreifabschnitt 22 erstreckt sich bevorzugt kreisbogenartig.

Die sich zufolge der vorbeschriebenen Ausgestaltung einstellenden Verriegelungsbereiche im Bereich der Übergreifabschnitte 22 sind in Erstreckungsrichtung der Drehachse y betrachtet um ein Maß zueinander beabstandet, welches in dem dargestellten Ausführungsbeispiel etwa einem Drittel des Deckeldurchmessers entspricht.

Weiter in Erstreckungsrichtung der Drehachse y betrachtet sind im Wesentlichen überdeckt jeweils durch einen Übergreifabschnitt 22 zwei Auflagebereiche 24 ausgebildet. Diese sind bevorzug kugelkopfartig oder ballenartig ausgeformt, insbesondere mit Bezug auf einen Vertikalschnitt gemäß Fig. 5 mit einer Auflagefläche, welche bevorzugt konzentrisch zur Drehachse y verläuft.

Die Höhlung 21 ist so gebildet, dass in einer Deckelfreigabestellung gemäß Fig. 5 oberhalb des Auflagebereiches 24 ein freies vertikales Anheben bzw. Absenken des Gefäßes 6 sowie des Deckels 10 erreichbar ist. Zufolge der insgesamt kreisscheibenförmigen Ausgestaltung des Deckels 10 ist dieser ungerichtet dem Gefäßrand zuordbar.

Die Drehachse y des Verriegelungsteils 17 erstreckt sich bevorzugt durch das Zentrum des Auflagebereiches 24, um so bei einer Rotation des Verriegelungsteiles 17 die Gefäßposition konstant zu halten.

In der Zuordnungsstellung (vgl. Fig. 5) lagert auf der ballig bis kugelig ausgeführten Fläche der Auflagebereiche 24 der Gefäßrand 13, wobei das Gefäß 6 vertikal durch das Verriegelungsteil 17 gehalten ist, um etwaige Längentoleranzen zwischen Gefäß 6 und Gefäßaufnahme 5 gezielt auf der Gefäßunterseite ausgleichen zu können.

Zum Betrieb der Küchenmaschine 1 wird der Deckel 10 aufgelegt, dies unter unmittelbarer Abstützung des Deckelrandes 16 auf dem Gefäßrand 13, gegebenenfalls mittelbar unter Zwischenschaltung der Dichtung.

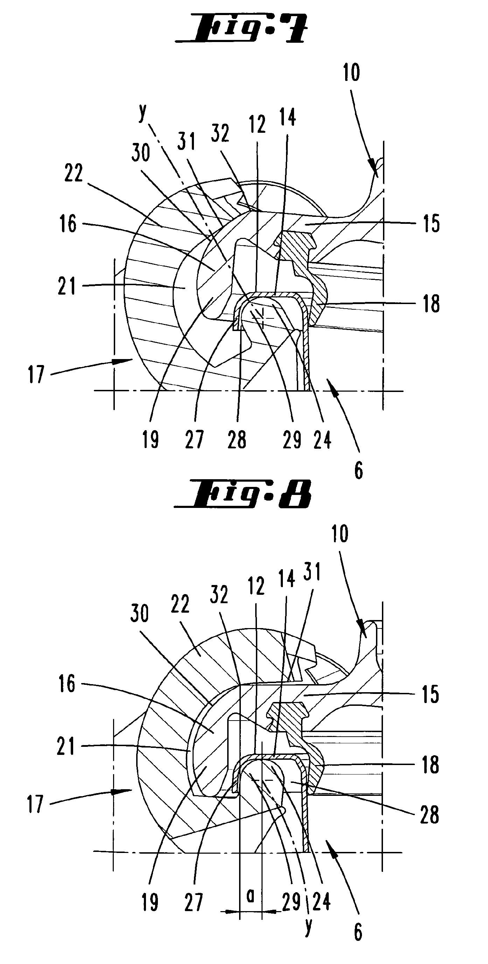

Zufolge Rotation der Verriegelungsteile 17 über den oder die Elektromotoren 20 werden die in Axialrichtung zueinander distanzierten Übergreifabschnitte 21 über den Deckelrand 16 verlagert bis hin in eine Endstellung gemäß Fig. 8, in welcher der verriegelte Zustand des Deckels 10 erreicht ist. Bevorzugt wird hierbei keine axiale Verspannung vom Gefäß 6 und Deckel 10 erreicht. Vielmehr wird bevorzugt allein sichergestellt, dass das Gefäß 6 und der Deckel 10 im verriegelten Zustand auch durch hohe Kräfte nicht zu trennen sind. Die Dichtigkeit wird durch die Dichtung 18 sichergestellt.

Der Gefäßrand 13 weist in zwei bevorzugt diametral gegenüberliegenden Bereichen, weiter bevorzugt in zwei quer zu einem Gefäßgriff 25 gegenüberliegenden Bereichen Einbuchtungen 26 auf. Diese sind jeweils gebildet durch einen Versatz nach radial Innen der radial äußeren, umlaufenden Randkante 27 des Gefäßrandes 13. Diese Randkante 27 umgreift in Umfangsrichtung betrachtet außerhalb der Einbuchtungen 26 den durch die Auflageflächen 14 gebildeten Auflagebereich in Vertikalrichtung von oben nach unten (vgl. Fig. 5).

Die Einbuchtungen 26 sind hinsichtlich ihrer Position und ihrer jeweiligen umfangsmäßigen Erstreckung so gebildet, dass in der Einsetzposition des Gefäßes 6 in der Gefäßaufnahme 5 die Auflagebereiche 24 der Verriegelungsteile 17 in diesen Einbuchtungen 26 aufgenommen einliegen, wobei jeweils eine, die Einbuchtung 26 in Umfangsrichtung begrenzende Einzugsfläche der Randkante 27 in Umfangsrichtung betrachtet außen an dem zugeordneten Auflagebereich 24 anliegt oder lediglich mit einem geringen Abstand von weniger als 1 mm verläuft.

Diese Einzugflächen der Einbuchtungen 26 sowie die Auflagebereiche 24 bilden Formschlussmittel 28, 29 aus, die eine bestimmte Drehwinkelausrichtung des Gargefäßes 6 relativ zu den Verriegelungsteilen 17, weiter bevorzugt relativ zu der Gefäßaufnahme 5 der Küchenmaschine 1 vorgeben.

Bei funktionsgerechter Deckellage, d.h. insgesamt einer im Wesentlichen parallelen Ausrichtung des Deckels 10 zur Gefäßöffnung bewegt sich der Übergreifabschnitt 22 eines jeden Verriegelungsteiles 17 um die Drehachse y und verriegelt den Deckel 10 gegen den Gefäßrand 13. Ist der Deckel 10 hingegen nicht gänzlich ordnungsgemäß aufgesetzt, befindet sich entsprechend beispielsweise in einer Schräglage (wie in Fig. 5 dargestellt), so wird dieser unter Nutzung des sich eindrehenden Verriegelungsteils 17 in die Verschlussstellung gezogen beziehungsweise gedrängt.

Hierzu ist zunächst der Deckelrand 16 im Übergangsbereich zu dem Randkragen 19 außen mit einer nach außen weisenden konvexen Krümmung 30 versehen.

Die nach radial Innen weisende Kontur des Übergreifabschnittes 22 verläuft ungleichmäßig. So ist zunächst ausgehend im Wesentlichen von dem der Drehachse y zugewandten Endbereich die innere Kontur des Verriegelungsteiles 17 gekrümmt gestaltet, weiter bevorzugt einen Krümmungsradius ausgehend von der Drehachse y in etwa aufweisend. Dieser bevorzugt gleichmäßig gekrümmte Konturabschnitt erstreckt sich bevorzugt etwa über zwei Drittel der freien Länge des Übergreifabschnittes 22.

An der gekrümmten Kontur schließt sich ein Konturabschnitt an, der im Wesentlichen geradlinig verläuft, hierbei bevorzugt ausgehend von der gekrümmten Kontur nach radial Innen weisend. Der geradlinig verlaufende Konturabschnitt trägt das Bezugszeichen 31.

Bei einer möglichen Deckelschiefstellung gemäß der Darstellung in Fig. 5 drückt der jeweilige Übergreifabschnitt 22 während des Verriegelungsvorganges auf die geometrisch angeformte Krümmung 30 des Deckelrandes 16 und verlagert hierüber ablaufschrägenartig den Deckel 10 in dessen Endlage. Die hierzu benötigte Kraft in dem Verriegelungsteil 17 wird in der unter dem kragenartigen Gefäßrand 13 ausgebildeten Lagerstelle den Auflagebereich 24 als Reaktionskraft aufgenommen. Durch das unter dem Gefäßrand 13 ausgebildete Gegenlager wird ein Ausweichen des Verriegelungsteiles 17 im Zuge der Deckelverlagerung vermieden.

In der erreichten Deckelverschluss- und Verriegelungsstellung gemäß Fig. 8 verläuft der geradlinige Konturabschnitt 31 der nach radial Innen weisenden Kontur des Übergreifabschnittes 22 nahezu horizontal, weiter bevorzugt einen spitzen Winkel von beispielsweise etwa 1 oder 2 Grad nach radial Innen (bezogen auf die Achse x) ansteigend einnehmend.

Der durch den geradlinig verlaufenden Konturabschnitt 31 übergriffene Deckelrandbereich weist mit Bezug auf einen Vertikalschnitt gemäß Fig. 8 eine ebene Fläche auf, woraus in bevorzugter Ausgestaltung sich zwischen dieser Fläche und der zugewandten Fläche des geradlinigen Konturabschnittes 31 ein minimaler, keilförmig sich nach radial Innen erweiternde Spalt einstellt.

Zufolge der vorbeschriebenen Ausgestaltung wirken je Verriegelungsteil 17 zwei definierte Kontaktpunkte oder Kontaktlinien auf den Deckel 10 ein, um diesen in allen möglichen Lagen sicher zu erfassen.

Bezogen auf einen Vertikalschnitt gemäß Fig. 8 ist im Verriegelungszustand der den Gefäßrand 13 untergreifende Auflagebereich 24 des Verriegelungsteiles 17 jedenfalls hinsichtlich seiner tatsächlichen Zusammenwirkung mit dem Gefäßrand 13 zwischen der balligen oder kugeligen Anlagefläche des Auflagebereiches 24 und der Unterseite der Auflagefläche 14 seitlich versetzt um ein Maß a zu einem möglichen Berührungsbereich 32 des Übergreifabschnittes 22 insbesondere im Bereich des geradlinigen Konturabschnittes 31 mit der Deckelaußenfläche.

Der horizontale Abstand a entspricht in bevorzugter Ausgestaltung etwa einem Viertel bis einem halben, bevorzugt etwa einem Drittel des Radiusmaßes zwischen Drehachse y und umlaufender Randkante des Verriegelungsteiles 17, wobei weiter der Berührungsbereich 32 mit Bezug auf die Gefäßachse x ein größeres Radialmaß aufweist als die Berührung des Auflagebereiches 24 mit dem Gefäßrand 13.

Hierdurch ist sichergestellt, dass ein Drehmoment in das Verriegelungsteil 17 eingeleitet wird, welches in Schließrichtung des Verriegelungsteiles 17 wirkt. Um diesen Zustand sicherzustellen, wird bevorzugt über die Elastizität des Deckels 10 und/oder der Dichtung 18 eine Vorspannung nach vertikal oben in Richtung auf den Berührungsbereich 32 zwischen Deckelrand 16 und dem linear verlaufenden Konturabschnitt 31 des Verriegelungsteiles 17 ausgeübt.

Zufolge der vorbeschriebenen Ausgestaltung ist mit Einsetzen des Gefäßes 6 in die Gefäßaufnahme 5 eine Vorpositionierung insbesondere im Bereich der Verriegelungsteile 17 gegeben. Mit Aufsetzen des Deckels 10 kommt die hieran angeordnete Dichtung 18 mit der Gefäß-Innengeometrie in Eingriff, wobei die Dichtung in Endlage umlaufend anliegt und sicher abdichtet. Auch durch den gegebenenfalls erst mit Einwirkung über ein Verriegelungsteil 17 erreichten Schließvorgang ist einem Umklappen der Dichtung 18 entgegengewirkt.

Mit Schließen der Verriegelungsteile 17 wird der Deckel 10 selbsttätig in die Endlage gezogen.

Ist der Deckel 10 ordnungsgemäß durch die Verriegelungsteile 17 verriegelt, erzeugen die gegebenenfalls im Betrieb entstehenden inneren Kräfte, beispielsweise innenseitig auf den Deckel 10 einwirkende Kräfte stets ein schließendes Moment auf das Verriegelungsteil 17.

Im verschlossenen Deckelzustand wird bevorzugt jede Relativbewegung, insbesondere in Umfangsrichtung des Gargefäßes 6 zwischen Gargefäß 6 und Deckel 10 vermieden.

**Bezugszeichenliste:**

| | | | |
|---|---|---|---|
| 1 | Küchenmaschine | 26 | Einbuchtung |
| 2 | Bedienfeld | 27 | Randkante |
| 3 | Regler | 28 | Formschlussmittel |
| 4 | Display | 29 | Formschlussmittel |
| 5 | Gefäßaufnahme | 30 | Krümmung |
| 6 | Gargefäß | 31 | Konturabschnitt |
| 7 | Rührwerk | 32 | Berührungsbereich |
| 8 | Elektromotor | | |
| 9 | Netzanschlusskabel | a | Abstandsmaß |
| 10 | Deckel | x | Achse |
| 11 | Einfüllöffnung | y | Drehachse |
| 12 | Gefäßwandung | | |
| 13 | Gefäßrand | | |
| 14 | Auflagefläche | | |
| 15 | Kragen | | |
| 16 | Deckelrand | | |
| 17 | Verriegelungsteil | | |
| 18 | Dichtung | | |
| 19 | Randkragen | | |
| 20 | Elektromotor | | |
| 21 | Höhlung | | |
| 22 | Übergreifabschnitt | | |
| 23 | Höhlungsabschnitt | | |
| 24 | Auflagebereich | | |
| 25 | Gefäßgriff | | |

## Patentansprüche

1. Elektrisch betriebene Küchenmaschine (1) mit einem Gargefäß (6) und einem Deckel (10) für das Gargefäß (6), wobei der Deckel (10) in der Verschlussstellung gegen das Gargefäß (6) verriegelbar ist, wobei weiter das Gargefäß (6) einen Gargefäßboden und eine sich von dem Gargefäßboden nach oben erstreckende Gefäßwandung (12) aufweist, die Gefäßwandung (12) in einen radial auskragenden Gefäßrand (13) übergeht, der Deckel (10) einen Deckelrand (16) aufweist, der in der Verschlussstellung in Überdeckung zu dem Gefäßrand (16) liegt, die Verriegelung aus einem zum Übergreifen des Deckels (10) bestehenden Verriegelungsteil (17) gebildet ist, das durch Drehen um eine Achse (y) aus einer Freigabestellung in die Verriegelungsstellung und umgekehrt verlagerbar ist, und das Verriegelungsteil (17) in Erstreckungsrichtung der Achse (y) langgestreckt ausgebildet ist und in der Verriegelungsstellung den Gefäßrand (13) untergreift sowie den Deckelrand (16) übergreift, **dadurch gekennzeichnet, dass** der Deckel (10) eine im Querschnitt nach unten überstehende Randkante (19) aufweist, die im Verriegelungszustand den auskragenden Gefäßrand (13) radial außen übergreift, dass die Achse (y) radial innen zu einer äußersten Randkante (27) des Gefäßrandes (13) liegt und dass bei aufliegendem, aber noch nicht in der Verschlussstellung befindlichem Deckel (10) eine konvexe Krümmung (30) des Deckelrandes (16) auf eine im Querschnitt abweichend von einer Kreisform gebildete innere Randkante des Verriegelungsteils (17) trifft und der Deckel (10) mittels elastisch nachgiebiger Wandungs- und/oder Dichtungsbereiche aus der noch nicht erreichten Verschlussstellung in die Verschlussstellung durch das Verriegelungsteil (17) ziehbar ist.

2. Küchenmaschine nach Anspruch 1, **dadurch gekennzeichnet, dass** die in der Verschlussstellung, bezogen auf einen Querschnitt, eine nach radial Innen weisende Kontur des Verriegelungsteiles (17) im Überdeckungsbereich zu dem Deckelrand (16) ungleichmäßig verläuft.

3. Küchenmaschine nach Anspruch 1 oder 2, **dadurch gekennzeichnet, dass** die nach radial Innen weisende Kontur des Verriegelungsteiles (17) teilweise gekrümmt und teilweise geradlinig verläuft.

4. Küchenmaschine nach Anspruch 3, **dadurch gekennzeichnet, dass** ein geradlinig verlaufender Abschnitt (31) der nach radial Innen weisenden Kontur im Verriegelungszustand nahezu horizontal verläuft.

5. Küchenmaschine nach einem der Ansprüche 1 bis 4, **dadurch gekennzeichnet, dass** ein im Verriegelungszustand den Gefäßrand (13) untergreifender Auflagebereich (24) des Verriegelungsteils (17) jedenfalls hinsichtlich seiner tatsächlichen Zusammenwirkung mit dem Gefäßrand (13), bezogen auf einen Querschnitt, seitlich versetzt zu einem Berührungsbereich (32) des Verriegelungsteils (17) mit der Deckelaußenfläche verläuft, wobei die Berührung mit der Deckelaußenfläche ein größeres Radialmaß aufweist als die Berührung des Auflagebereiches (24) mit dem Gefäßrand (13).

6. Küchenmaschine nach einem der vorhergehenden Ansprüche, **dadurch gekennzeichnet, dass** eine bestimmte Drehwinkelausrichtung des Gargefäßes (6) relativ zu dem Verriegelungsteil (17) durch an dem Gargefäß (6) und dem Verriegelungsteil (17) ausgebildete Formschlussmittel (28, 29) vorgegeben ist.

7. Küchenmaschine nach Anspruch 6, **dadurch gekennzeichnet, dass** die Formschlussmittel (28, 29) des Gargefäßes (6) an dem Gefäßrand (13) ausgebildet sind.

8. Küchenmaschine nach einem der vorhergehenden Ansprüche, **dadurch gekennzeichnet, dass** das Verriegelungsteil (17) einen Auflagebereich (24) und das Gargefäß (6) ein zu dem Auflagebereich (24) benachbartes Formschlussmittel (28) aufweist.

9. Küchenmaschine nach Anspruch 8, **dadurch gekennzeichnet, dass** das Verriegelungsteil (17) zwei bezogen auf einen Umfang des Gargefäßes (6) beabstandete Auflagebereiche (24) aufweist und dass die Formschlussmittel (28) des Gargefäßes (6) in Umfangsrichtung zwischen den Auflagebereichen (24) ausgebildet sind.

10. Küchenmaschine nach einem der Ansprüche 8 oder 9, **dadurch gekennzeichnet, dass** die äußerste Randkante (27) des Gargefäßes (6), die den Auflagebereich (24) in Vertikalrichtung von oben nach unten umgreift, zur Ausbildung der Formschlussmittel (28) des Gargefäßes (6), in Umfangsprojektion auf den Auflagebereich (24) des Verriegelungsteils (17) durch eine Versetzung nach radial Innen in Überdeckung zu oder radial Innen zu dem Auflagebereich (24) verläuft.

## Claims

1. Electrically operated food processor (1) comprising a cooking vessel (6) and a lid (10) for the cooking vessel (6), it being possible to lock the lid (10) to the cooking vessel (6) in the closed position, the cooking vessel (6) further comprising a cooking vessel base and a vessel wall (12) extending upwards from the cooking vessel base, the vessel wall (12) transitions into a radially projecting vessel edge (13), the lid (10) comprises a lid edge (16) which overlaps the vessel edge (16) in the closed position, the locking mechanism is formed by a locking element (17) provided to overlap the lid (10), which locking element can be moved from a release position into the locking position and vice versa by means of rotation about an axis (y), and the locking element (17) is formed in an elongate manner in the extension direction of the axis (y) and engages under the vessel edge (13) and overlaps the lid edge (16) in the locking position, **characterised in that** the lid (10) comprises an edge portion (19) projecting downwards in cross section, which edge portion radially overlaps the projecting vessel edge (13) on the outside in the locking state, **in that** the axis (y) is radially inside an outermost edge portion (27) of the vessel edge (13), and **in that**, when the lid (10) is on but not yet in the closed position, a convex curvature (30) of the lid edge (16) meets an inner edge portion of the locking element (17), which edge portion has a cross section which differs from a circle, and the lid (10) can be pulled through the locking element (17) by means of resiliently flexible wall and/or sealing regions from the closed position which has not yet been reached into the closed position.

2. Food processor according to claim 1, **characterised in that**, in the closed position, based on a cross section, the a contour of the locking element (17) pointing radially inwards extends irregularly in the overlap region to the lid edge (16).

3. Food processor according to either claim 1 or claim 2, **characterised in that** the contour of the locking element (17) pointing radially inwards extends in part in a curved manner and in part linearly.

4. Food processor according to claim 3, **characterised in that** a linearly extending portion (31) of the contour pointing radially inwards extends almost horizontally in the locking state.

5. Food processor according to any of claims 1 to 4, **characterised in that**, based on a cross section, a support region (24) of the locking element (17) which engages under the vessel edge (13) in the locking state extends so as to be laterally offset from a contact region (32) of the locking element (17) with the outer surface of the lid, in each case with regard to the actual cooperation of said support region with the vessel edge (13), the contact with the outer surface of the lid having a greater radial extent than the contact of the support region (24) with the vessel edge (13).

6. Food processor according to any of the preceding claims, **characterised in that** a particular orientation of the angle of rotation of the cooking vessel (6) relative to the locking element (17) is specified by positive connection means (28, 29) formed on the cooking vessel (6) and on the locking element (17).

7. Food processor according to claim 6, **characterised in that** the positive connection means (28, 29) of the cooking vessel (6) are formed on the vessel edge (13).

8. Food processor according to any of the preceding claims, **characterised in that** the locking element (17) comprises a support region (24) and the cooking vessel (6) comprises a positive connection means (28) adjacent to the support region (24).

9. Food processor according to claim 8, **characterised in that** the locking element (17) comprises two support regions (24) spaced apart with respect to a periphery of the cooking vessel (6), and **in that** the positive connection means (28) of the cooking vessel (6) are formed in the peripheral direction between the support regions (24).

10. Food processor according to either claim 8 or claim 9, **characterised in that** the outermost edge portion (27) of the cooking vessel (6), which encompasses the support region (24) in the vertical direction from top to bottom, extends in a peripheral projection onto the support region (24) of the locking element (17) by means of an offset radially inwards overlapping the support region (24) or radially inwards thereto in order to form the positive connection means (28) of the cooking vessel (6).

## Revendications

1. Robot de cuisine (1) fonctionnant de manière électrique ayant un récipient de cuisson (6) et un couvercle (10) pour le récipient de cuisson (6), le couvercle (10) pouvant être verrouillé contre le récipient de cuisson (6) dans la position de fermeture, dans lequel, en outre, le récipient de cuisson (6) présente un fond de récipient de cuisson et une paroi de récipient (12) s'étendant vers le haut à partir du fond du récipient de cuisson, la paroi du récipient (12) se prolonge par un bord de récipient (13) réalisé en porte-à-faux dans la direction radiale, le couvercle (10) présente un bord de couvercle (16) qui repose en superposition avec le bord du récipient (13) dans la position de fermeture, le verrouillage est formé par une partie de verrouillage (17) destinée à saisir par le dessus le couvercle (10) qui peut être déplacée d'une position de libération à la position de verrouillage et inversement par rotation autour d'un axe (y) et la partie de verrouillage (17) est formée de façon allongée dans la direction dans laquelle l'axe (y) s'étend et, dans la position de verrouillage, elle saisit le bord du récipient (13) par le dessous et le bord du couvercle (16) par le dessus, **caractérisé en ce que** le couvercle (10) présente une arête de bord (19) faisant saillie vers le bas dans la section qui, dans l'état de verrouillage, saisit le bord du récipient (13) en porte-à-faux radialement vers l'extérieur par le dessus, **en ce que** l'axe (y) se situe radialement à l'intérieur par rapport à une arête de bord la plus à l'extérieur (27) du bord du récipient (13), et **en ce que** lorsque le couvercle (10) est posé, mais ne se trouve pas encore dans la position de fermeture, une courbure convexe (30) du bord du couvercle (16) rencontre une arête de bord intérieure de la partie de verrouillage (17) formée en s'écartant d'une forme circulaire dans la section et le couvercle (10) peut être amené depuis la position de fermeture non encore atteinte jusqu'à la position de fermeture par la partie de verrouillage (17) au moyen de zones de la paroi et/ou du joint d'étanchéité flexibles élastiquement.

2. Robot de cuisine selon la revendication 1, **caractérisé en ce que** dans la position de fermeture, par référence à une section, un contour de la partie de verrouillage (17) se présentant vers l'intérieur radialement s'étend de façon irrégulière dans la zone de superposition jusqu'au bord du couvercle (16).

3. Robot de cuisine selon la revendication 1 ou 2, **caractérisé en ce que** le contour de la partie de verrouillage (17) se présentant vers l'intérieur radialement s'étend en partie de façon courbe et en partie de façon rectiligne.

4. Robot de cuisine selon la revendication 3, **caractérisé en ce que** dans l'état de verrouillage, une section rectiligne (31) du contour se présentant vers l'intérieur radialement s'étend presque horizontalement.

5. Robot de cuisine selon l'une des revendications 1 à 4, **caractérisé en ce qu'**une zone de support (24) de la partie de verrouillage (17) qui, dans l'état de verrouillage, saisit le bord du récipient (13) par le dessous s'étend respectivement, au niveau de sa coopération effective avec le bord du récipient (13), par référence à une section, en décalage latéral par rapport à une zone de contact (32) de la partie de verrouillage (17) avec la surface extérieure du couvercle, le contact avec la surface extérieure du couvercle présentant une plus grande dimension radiale que le contact de la zone de support (24) avec le bord du récipient (13).

6. Robot de cuisine selon l'une des revendications précédentes, **caractérisé en ce qu'**une orientation déterminée de l'angle de rotation du récipient de cuisson (6) par rapport à la partie de verrouillage (17) est prédéfinie par des moyens d'assemblage par force mécanique (28, 29) formés sur le récipient de cuisson (6) et sur la partie de verrouillage (17).

7. Robot de cuisine selon la revendication 6, **caractérisé en ce que** les moyens d'assemblage par force mécanique (28, 29) du récipient de cuisson (6) sont formés sur le bord du récipient (13).

8. Robot de cuisine selon l'une des revendications précédentes, **caractérisé en ce que** la partie de verrouillage (17) présente une zone de support (24) et le récipient de cuisson (6) un moyen d'assemblage par force mécanique (28) adjacent à la zone de support (24).

9. Robot de cuisine selon la revendication 8, **caractérisé en ce que** la partie de verrouillage (17) présente deux zones de support (24) situées à distance par référence à une circonférence du récipient de cuisson (6) et **en ce que** les moyens d'assemblage par force mécanique (28) du récipient de cuisson (6) sont formés entre les zones de support (24) dans la direction de la circonférence.

10. Robot de cuisine selon l'une des revendications 8 ou 9, **caractérisé en ce que** l'arête de bord la plus à l'extérieur (27) du récipient de cuisson (6) qui saisit en l'entourant la zone de support (24) du haut vers le bas dans la direction verticale s'étend, en vue de la formation des moyens d'assemblage par force mécanique (28) du récipient de cuisson (6), dans une projection de la circonférence sur la zone de support (24) de la partie de verrouillage (17) à travers un décalage vers l'intérieur radialement en superposition ou radialement à l'intérieur par rapport à la zone de support (24).
